# EUROPÄISCHE PATENTSCHRIFT

(11) **EP 1 027 476 B1**
(45) Veröffentlichungstag und Bekanntmachung des Hinweises auf die Patenterteilung: **14.01.2004**
(21) Anmeldenummer: 98959709.1
(22) Anmeldetag: 02.10.1998
(51) Int. Cl.: C23C 30/00

(54) **SCHNEIDWERKZEUG, SOWIE VERFAHREN ZUR BESCHICHTUNG VON SCHNEIDWERKZEUGEN**
CUTTING TOOL AND METHOD FOR COATING CUTTING TOOLS
OUTIL DE COUPE ET PROCEDE POUR APPLIQUER UN REVETEMENT SUR DES OUTILS DE COUPE

(30) Priorität: 07.10.1997 DE 19744214
(43) Veröffentlichungstag der Anmeldung: 16.08.2000
(73) Patentinhaber: Dialux Diamantwerkzeuge GmbH & Co. KG, 91126 Schwabach (DE)
(72) Erfinder: GRÜNEIS, Hans, D-91126 Schwabach (DE)
(74) Vertreter: Schuhmann, Albrecht
(86) Internationale Anmeldenummer: PCT/DE1998/002947
(87) Internationale Veröffentlichungsnummer: WO 1999/018260

(56) Entgegenhaltungen:
- DE-A- 19 520 149
- US-A- 2 728 651
- US-A- 5 492 771

## Beschreibung

Die Erfindung betrifft ein Schneidwerkzeug mit den Merkmalen des Oberbegriffs des Anspruchs 1, sowie ein Verfahren zur Beschichtung von solchen Schneidwerkzeugen

Es ist bekannt, auf einen Grundkörper aus Stahl einen Schneidbelag, der Diamantkörner enthalt, mittels eines Laserstrahls aufzuschmelzen. Die DE-A-195 20 149 beschreibt beispielsweise die Beschichtung eines rotationssymmetrischen Sägeblatts mit einem pulvrigen Gemisch aus Bronze und Diamantkörnern, wobei das Pulver pneumatisch auf den Grundkörper gefördert wird und dort mittels eines gepulsten Nd:YAG-Lasers aufgeschmolzen wird. Die Stärke der Beschichtung liegt zwischen 0,1 und 5 mm. In der Praxis hat es sich erwiesen, daß es vorteilhaft ist, dem Pulver benetzungsfördernde Stoffe für die Diamantkörner beizumischen. Solche benetzungsfördernden Stoffe können Metalle, wie Titan, Niob, Yttrium, Zirkon oder dergleichen, chemische Metallverbindungen wie Titanhydrid oder nichtmetallische benetzungsfördernde Stoffe, wie Bor sein. Es wird so zwar eine gleichmäßige Verteilung der Diamantkörner in der Schmelze erreicht, jedoch nimmt die Haftfestigkeit des Schneidbelags auf dem Grundkörper, der in der Regel aus gehärtetem und angelassenen Stahl besteht, dadurch stark ab. Während beispielsweise bei einem Schneidbelag ohne Zusatz eines benetzungsfördernden Stoffs Biegebruchmomente eines genormten Schneidteils von 10 - 25 Nm erzielt werden, sinkt durch Zusatz von Titan dieser Wert auf 3 - 7 Nm und liegt damit unter dem geforderten Wert von 10 Nm.

Aus der US-A-27 28 651 ist es bekannt, einen Trennscheibengrundkörper mit einer Schicht aus Lot zu versehen, auf die Diamantkörner in einer Titanhydridmatrix aufgebracht werden. Die Trennscheibe wird dann erhitzt, wodurch sich Titan und Hydrid trennen und es zwischen dem Titan und der Schicht aus Lot, beispielsweise einer eutektischen Mischung aus Silber und Kupfer zu einer engen Verbindung kommt.

Aufgabe der vorliegenden Erfindung ist es daher, ein Schneidwerkzeug und ein Verfahren zu dessen Herstellung zu schaffen, bei dem trotz Zusatz benetzungsfördernder Stoffe im Schneidbelag eine ausreichende Haftfestigkeit des Schneidbelags erzielt wird.

Diese Aufgabe wird mit den im kennzeichnenden Teil des Anspruchs 1 genannten Merkmalen gelöst. Fortbildungen und vorteilhafte Ausführungen der Erfindung sind in den weiteren Ansprüchen umfaßt.

Erfindungsgemäß ist ein Schneidwerkzeug, insbesondere eine Trennscheibe, Bohrkrone oder ein Sägeseil, bestehend aus einem Grundkörper aus Stahl und einem auf diesem aufgeschmolzenen Schneidbelag aus einem Hartstoffe enthaltenden Metall, einer Hartstoffe enthaltenden Metallverbindung oder einer Hartstoffe enthaltenden Metalllegierung, dadurch gekennzeichnet, daß das Metall, die Metallverbindung, bzw. die Metalllegierung einen Anteil eines bezogen auf die Hartstoffe benetzungsfördernden Metalls, einer solchen Metallverbindung oder Metalllegierung oder eines benetzungsfördernden Nichtmetalls wie Bor enthält, und daß zwischen dem Metall, der Metallverbindung, bzw. der Metalllegierung und dem Grundkörper eine Zwischenschicht aus einem Nichteisenmetall, einer Nichteisenmetallverbindung oder einer Nichteisenmetalllegierung, die keinen Anteil des benetzungsfördernden Metalls, einer solchen Metallverbindung oder Metalllegierung, oder des benetzungsfördernden Nichtmetalls enthält, aufgebracht ist.

Nach einer bevorzugten Ausführung der Erfindung besteht die Zwischenschicht aus Kupfer oder einer kupferhaltigen Legierung.

Gute Ergebnisse wurden beispielsweise mit reinem Kupfer und verschiedenen Bronzen (CuSn 20, CuSn 15, CuSn 10) erzielt.

Das Metall, die Metallverbindung, bzw. die Metalllegierung ist mittels eines Laserstrahls aufgeschmolzen. Auch die Zwischenschicht kann mittels eines Laserstrahls aufgeschmolzen sein und weist eine Stärke von wenigstens 0,1 mm, vorzugsweise von zwischen 0,6 und 1,2 mm auf. Alternativ kann die Zwischenschicht in einem vorherigen Arbeitsgang galvanisch erstellt worden sein. Die Schneidschicht weist einen Anteil von zwischen 5 und 30 Gewichtsprozent eines benetzungsfördernden Stoffes, sowie zwischen 5 und 80 Volumenprozent Hartstoffe auf. Die Hartstoffe sind vorzugsweise Diamantkörner.

Das erfindungsgemäße verfahren zur Beschichtung von Schneidwerkzeugen, insbesondere Trennscheiben, bei welchem auf einem Grundkörper ein Schneidbelag aus einem Hartstoffe, wie Diamantkörner enthaltenden Metallpulver mittels eines Laserstrahls aufgeschmolzen wird, wobei der Schneidbelag einen Anteil eines bezogen auf die Hartstoffe benetzungsfördernden Metalls, einer solchen Metallverbindung oder Metalllegierung oder eines benetzungsfördernden Stoffes wie Bor enthält, ist
dadurch gekennzeichnet, daß vor dem Aufschmelzen des Schneidbelags eine Zwischenschicht aus einem Nichteisenmetall, einer Nichteisenmetallverbindung oder einer Nichteisenmetalllegierung aufgebracht wird, die keinen Anteil des benetzungsfördernden Metalls, einer solchen Metallverbindung oder Metalllegierung oder des benetzungsfördernden Stoffes wie Bor enthält.

### Ausführungsbeispiel:

Für die Herstellung einer Trennscheibe wird auf einen in einer Kokille gehaltenen scheibenförmigen Grundkörper aus einem gehärteten und angelassenen Stahl mit einer Härte von ca. 36 HRC und einem Kohlenstoffgehalt unter 0,27 Gewichtsprozent mit regelmäßig an seinem Umfang angeordneten Schneidsegmenten mittels eines gepulsten Nd:YAG-Lasers zunächst eine 0,8 mm starke Zwischenschicht aus reinem Kupfer erzeugt, das als Pulver pneumatisch in die Wirkzone des entlang der Schneidsegmente geführten Laserstrahls gefördert wird und dort aufschmilzt. Anschließend wird mit dem gleichen Verfahren eine Schneidschicht aus einem Metallpulvergemisch aus 72 Gewichtsprozent einer Bronze (CuSn 20), 8 Gewichtsprozent Titan als benetzungsförderndem Stoff und 10 Volumenprozent Diamantkörnern in einer Stärke von 5 mm erstellt. Die Diamantkörner sind in der aufgeschmolzenen Bronze-Titanmatrix gleichmäßig verteilt. Das Titan kommt mit dem Grundkörper aus Stahl nicht in Berührung, so daß die Haftfestigkeit des Schneidbelags ausreichend ist.

## Patentansprüche

1. Schneidwerkzeug, insbesondere Trennscheibe, Bohrkrone oder Sägeseil, bestehend aus einem Grundkörper aus Stahl und einem auf diesem aufgeschmolzenen Schneidbelag aus einem Hartstoffe enthaltenden Metall, einer Hartstoffe enthaltenden Metallverbindung oder einer Hartstoffe enthaltenden Metalllegierung,
**dadurch gekennzeichnet,**
**daß** das Metall, die Metallverbindung, bzw. die Metalllegierung einen Anteil eines bezogen auf die Hartstoffe benetzungsfördernden Metalls, einer solchen Metallverbindung oder Metalllegierung oder eines benetzungsfördernden Nichtmetalls wie Bor enthält,
**daß** zwischen dem Metall, der Metallverbindung, bzw. der Metalllegierung und dem Grundkörper eine Zwischenschicht aus einem Nichteisenmetall, einer Nichteisenmetallverbindung oder einer Nichteisenmetalllegierung, die keinen Anteil des benetzungsfördernden Metalls, einer solchen Metallverbindung oder Metalllegierung, oder des benetzungsfördernden Nichtmetalls wie Bor enthält, aufgebracht ist,
und **daß** das Metall, die Metallverbindung, bzw. die Metalllegierung mittels eines Laserstrahls aufgeschmolzen ist.

2. Schneidwerkzeug nach Anspruch 1,
**dadurch gekennzeichnet,**
**daß** die Zwischenschicht aus Kupfer oder einer kupferhaltigen Legierung besteht.

3. Schneidwerkzeug nach Anspruch 1 oder 2,
**dadurch gekennzeichnet,**
**daß** die Zwischenschicht mittels eines Laserstrahls aufgeschmolzen ist.

4. Schneidwerkzeug nach einem der vorhergehenden Ansprüche,
**dadurch gekennzeichnet,**
**daß** die Zwischenschicht eine Stärke von wenigstens 0,1 mm aufweist.

5. Schneidwerkzeug nach Anspruch 4,
**dadurch gekennzeichnet,**
**daß** die Zwischenschicht eine Stärke von zwischen 0,6 und 1,2 mm aufweist.

6. Schneidwerkzeug nach einem der vorhergehenden Ansprüche,
**dadurch gekennzeichnet,**
**daß** die Hartstoffe Diamantkörner sind.

7. verfahren zur Beschichtung von Schneidwerkzeugen, insbesondere Trennscheiben, bei welchem auf einem Grundkörper ein Schneidbelag aus einem Hartstoffe, wie Diamantkörner enthaltenden Metallpulver mittels eines Laserstrahls aufgeschmolzen wird,
wobei der Schneidbelag einen Anteil eines bezogen auf die Hartstoffe benetzungsfördernden Metalls, einer solchen Metallverbindung oder Metalllegierung oder eines benetzungsfördernden Nichtmetalls wie Bor enthält,
**dadurch gekennzeichnet,**
**daß** vor dem Aufschmelzen des Schneidbelags mittels eines Laserstrahls eine Zwischenschicht aus einem Nichteisenmetall, einer Nichteisenmetallverbindung oder einer Nichteisenmetalllegierung aufgebracht wird, die keinen Anteil des benetzungsfördernden Metalls, einer solchen Metallverbindung oder Metalllegierung oder des benetzungsfördernden Nichtmetalls enthält.

## Revendications

1. Outil de coupe, en particulier une meule de tronçonnage, une couronne de sondage ou bien un câble de sciage, constitué d'un substrat en acier d'une garniture de coupe qui est fondue sur ledit substrat et qui est constituée par un métal contenant des matières dures, un composé métallique contenant des matières dures ou bien un alliage métallique contenant des matières dures,
**caractérisé en ce que**
le métal, le composé métallique, resp. l'alliage métallique contient un pourcentage d'un métal favorisant l'imprégnation des matières dures, d'un composé d'untel métal ou alliage métallique, ou bien d'un métalloïde favorisant l'imprégnation tel que le bore,
une couche intermédiaire constituée d'un métal non ferreux, d'un composé métallique non ferreux ou d'un alliage métallique non ferreux, qui ne contient aucun pourcentage du métal favorisant l'imprégnation, d'un composé d'untel métal ou alliage métallique, ou bien du métalloïde favorisant l'imprégnation tel que le bore, est appliquée entre le métal, le composé métallique, resp. l'alliage métallique et le substrat, et
le métal, le composé métallique, resp. l'alliage métallique est fondu au moyen d'un faisceau laser.

2. Outil de coupe selon la revendication 1, **caractérisé en ce que** la couche intermédiaire est constituée par du cuivre ou un alliage contenant du cuivre.

3. Outil de coupe selon la revendication 1 ou 2, **caractérisé en ce que** la couche intermédiaire est fondue au moyen d'un faisceau laser.

4. Outil de coupe selon l'une des revendications précédentes, **caractérisé en ce que** la couche intermédiaire a une épaisseur d'au moins 0,1 mm.

5. Outil de coupe selon la revendication 4, **caractérisé en ce que** la couche intermédiaire a une épaisseur comprise entre 0,6 et 1,2 mm.

6. Outil de coupe selon l'une des revendications précédentes, **caractérisé en ce que** les matières dures sont des grains de diamant.

7. Procédé de revêtement d'outils de coupe, en particulier de disques de tronçonnage, dans lequel une garniture de coupe constituée d'une poudre métallique contenant des substances dures, telles que des grains de diamant, est fondue sur un substrat au moyen d'un faisceau laser, la garniture contenant un pourcentage d'un métal favorisant l'imprégnation des matières dures, d'un tel composé métallique ou alliage métallique, ou bien d'un métalloïde favorisant l'imprégnation tel que le bore,
**caractérisé en ce qu'**une couche intermédiaire constituée d'un métal non ferreux, d'un composé métallique non ferreux ou d'un alliage métallique non ferreux, qui ne contient aucun pourcentage du métal favorisant l'imprégnation, d'un tel composé métallique ou alliage métallique, ou bien du métalloïde favorisant l'imprégnation tel que le bore, est appliquée avant de fondre la garniture de coupe au moyen d'un faisceau laser.

## Claims

1. Cutting tool, in particular abrasive cutting-off wheel, drill bit or saw wire, comprising a base body made from steel and a cutting coating which is fused onto it and is made from a metal which includes hard materials, a metal compound which includes hard materials or a metal alloy which includes hard materials, **characterized in that** the metal, the metal compound or the metal alloy contains a fraction of a metal which promotes wetting with respect to the hard materials, of a metal compound or metal alloy of this type or of a non-metal which promotes wetting, such as boron, **in that** an intermediate layer made from a non-ferrous metal, a non-ferrous metal compound or a non-ferrous metal alloy, which does not contain any fraction of the metal which promotes wetting, of a metal compound or metal alloy of this type or of the non-metal which promotes wetting, such as boron, is applied between the metal, the metal compound or the metal alloy and the base body, and **in that** the metal, the metal compound or the metal alloy is fused on by means of a laser beam.

2. Cutting tool according to Claim 1, **characterized in that** the intermediate layer consists of copper or a copper-containing alloy.

3. Cutting tool according to Claim 1 or 2, **characterized in that** the intermediate layer is fused on by means of a laser beam.

4. Cutting tool according to one of the preceding claims, **characterized in that** the intermediate layer has a thickness of at least 0.1 mm.

5. Cutting tool according to Claim 4, **characterized in that** the intermediate layer has a thickness of between 0.6 and 1.2 mm.

6. Cutting tool according to one of the preceding claims, **characterized in that** the hard materials are diamond grains.

7. Process for coating cutting tools, in particular abrasive cutting-off wheels, in which a cutting coating made from a metal powder which contains hard materials, such as diamond grains, is fused onto a base body by means of a laser beam, the cutting coating containing a fraction of a metal which promotes wetting with respect to the hard materials, of a metal compound or metal alloy of this type or of a non-metal which promotes wetting, such as boron, **characterized in that** before the cutting coating is fused on by means of a laser beam, an intermediate layer comprising a non-ferrous metal, a non-ferrous metal compound or a non-ferrous metal alloy, which does not contain any fraction of the metal which promotes wetting, of a metal compound or metal alloy of this type or of the non-metal which promotes wetting, is applied.
